# EUROPEAN PATENT APPLICATION

(11) **EP 4 678 942 A1**
(43) Date of publication of application: **14.01.2026**
(21) Application number: 24888586.5
(22) Date of filing: 28.10.2024
(51) Int. Cl.: F16H 55/06, C08J 5/04, C08L 77/00

(54) **RESIN GEAR**

(30) Priority: 08.11.2023 JP 2023190878
(71) Applicant: RESONAC CORPORATION, Tokyo 105-7325 (JP)
(72) Inventor: ASANO, Ayano, Tokyo 105-7325 (JP); OZAWA, Masaya, Tokyo 105-7325 (JP)
(74) Representative: Berggren Oy
(86) International application number: PCT/JP2024/038373
(87) International publication number: WO 2025/100289

(57) **Abstract**

A resin gear has a tooth portion comprising a resin molded body, the resin molded body comprises a fiber base material and a resin component, and the fiber base material comprises an aramid fiber containing para-aramid fiber in an amount of 80% by mass to 100% by mass.

## Description

### Technical Field

The present invention relates to a resin gear.

### Background Art

A resin molded body composed of a fiber base material and a matrix resin is used in various fields because of its excellent lightweight property and mechanical properties. For example, a resin gear formed from a resin molded body can be made lighter and quieter than a metal gear, and is therefore used as a component for machine tools, industrial machinery, automobile engines, drive units for electric motorcycles, and the like (see, for example, Patent Literature 1 below).

### Citation List

### Patent Literature

Patent Literature 1: Japanese Unexamined Patent Publication No. H11-227061

### Summary of Invention

### Technical Problem

By the way, for resin gears used in automobile engines, drive units for electric motorcycles, and the like, the load applied to the teeth tends to increase due to the downsizing of gears, replacement of metal gears, and the like. Therefore, there is a demand for a resin gear having durability that can achieve a long life even in high-load durability tests.

Therefore, an object of the present invention is to provide a resin gear with excellent durability.

### Solution to Problem

One aspect of the present invention relates to the inventions described in [1] to [5] below.
[1] A resin gear having a tooth portion comprising a resin molded body, wherein the resin molded body comprises a fiber base material and a resin component, and the fiber base material comprises an aramid fiber containing para-aramid fiber in an amount of 80% by mass to 100% by mass.
[2] The resin gear according to [1], wherein the resin component is a cured product of a thermosetting resin composition impregnated into the fiber base material, and the thermosetting resin composition comprises (A) a bis(2-oxazoline) compound and (B) an aromatic diamine compound.
[3] The resin gear according to [2], wherein the thermosetting resin composition further comprises (C) an organic cyclic compound (excluding carboxylic acid compounds) having at least one polar functional group selected from the group consisting of a hydroxyl group, an amide group, and a carbonyl group, and at least one cyclic structure selected from the group consisting of an alicyclic ring and an aromatic ring.
[4] The resin gear according to [3], wherein a content of the organic cyclic compound is from 5 to 95 parts by mass, based on a total of 100 parts by mass of the aromatic diamine compound and the organic cyclic compound.
[5] The resin gear according to [3] or [4], wherein the organic cyclic compound is 1-(2-hydroxyethyl)-2-pyrrolidone or N-(2,4,6-trichlorophenyl)maleimide.

### Advantageous Effects of Invention

According to the present invention, it is possible to provide a resin gear with excellent durability.

### Brief Description of Drawings

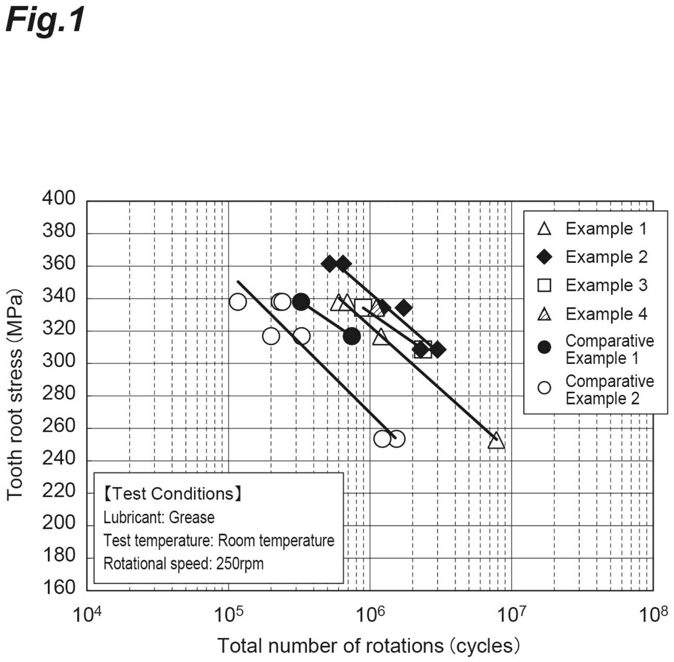

Fig. 1 is a diagram showing the results of a motoring durability test of a resin gear.

### Description of Embodiments

Hereinafter, embodiments for carrying out the present invention (hereinafter referred to as "the present embodiments") will be described in detail. The present invention is not limited to the following embodiments.

### [Resin Gear]

The resin gear of the present embodiment has a tooth portion comprising a resin molded body, and the resin molded body comprises a fiber base material and a resin component.

### [Fiber Base Material]

Examples of the fiber base material include thermoplastic resin fibers such as polyphenylene sulfide, polyamide (aliphatic polyamide, aromatic polyamide), polyethylene, and polypropylene; inorganic fibers such as basalt fiber, alumina fiber, glass fiber, and carbon fiber; and metal fibers such as stainless steel fiber and aluminum fiber. The fiber base material may contain one type of fiber alone or a combination of two or more types of fibers.

In the resin gear of the present embodiment, from the viewpoint of durability, the fiber base material comprises an aramid fiber containing para-aramid fiber in an amount of 80% by mass to 100% by mass.

As the para-aramid fiber, a fiber having a molecular structure represented by the following formulas (1) to (2) can be used.

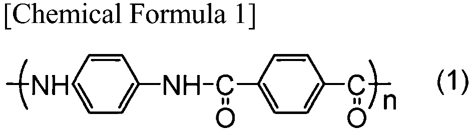

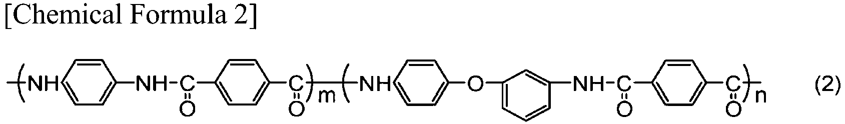

As the para-aramid fiber, commercially available products can be used, such as "Twaron" and "Technora" (both trade names, manufactured by Teijin Limited), "Kevlar Pulp" (trade name, manufactured by Toray-DuPont Co., Ltd.), "Taparan" (trade name, manufactured by Yantai Tayho Advanced Materials Co., Ltd.), and "Heracron" (trade name, manufactured by Kolon Industries, Inc.).

The aramid fiber may contain a meta-aramid fiber (meta-type aramid fiber) in addition to the para-aramid fiber (para-type aramid fiber).

As the meta-aramid fiber, a fiber having a molecular structure represented by the following formula (3) can be used.

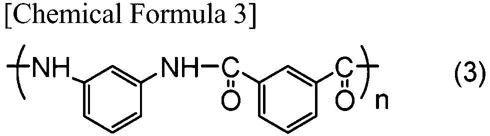

As the meta-aramid fiber, commercially available products can be used, such as "Conex" (trade name, manufactured by Teijin Limited), "Nomex" (trade name, manufactured by DuPont), "Newstar" (trade name, manufactured by Yantai Tayho Advanced Materials Co., Ltd.), and "Tametar" (trade name, manufactured by Yantai Tayho Advanced Materials Co., Ltd.).

The content of the para-aramid fiber in the aramid fiber may be from 85% by mass to 100% by mass, and may be from 85% by mass to 90% by mass, based on the total amount of the aramid fiber, from the viewpoint of improving the tensile strength of the resin molded body to obtain a higher level of durability.

The content of the aramid fiber in the fiber base material may be from 50% by mass to 100% by mass, may be from 60% by mass to 100% by mass, or may be 100% by mass, based on the total amount of the fiber base material.

The fiber length of the aramid fiber may be from 1 to 12 mm, may be from 1 to 2 mm, may be from 3 to 6 mm, or may be from 7 to 12 mm, from the viewpoint of availability.

The fiber diameter of the aramid fiber may be from 8 to 12 µm, from the viewpoints of availability and permeability of the resin into the base material.

The fiber base material may contain an inorganic sliding material. Examples of the inorganic sliding material include carbon, molybdenum, molybdenum disulfide, potassium hexatitanate, potassium octatitanate, lithium potassium titanate, magnesium potassium titanate, and mica.

From the viewpoint of mechanical strength, the content of the inorganic sliding material in the resin molded body may be 10 parts by mass or less, or 5 parts by mass or less, per 100 parts by mass of the fiber base material, or the inorganic sliding material may not be contained.

The proportion of the fiber base material in the resin molded body may be from 35% by volume to 55% by volume, may be from 35% by volume to 50% by volume, or may be from 50% by volume to 55% by volume, from the viewpoints of ensuring mechanical strength and the impregnation speed of the resin.

Further, the content of the fiber base material in the resin molded body may be from 35 to 50 parts by mass, or from 40 to 50 parts by mass, per 100 parts by mass of the total of the fiber base material and the cured product of the thermosetting resin composition of the present embodiment, from the viewpoint of facilitating impregnation of the molten resin into the base material.

### [Resin Component]

Examples of the resin component include polyamide resin, polyaminoamide resin, epoxy resin, phenol resin, melamine resin, urea resin, polyimide resin, and polyester resin. In the resin gear of the present embodiment, the resin component may be a cured product of a thermosetting resin composition impregnated into the fiber base material.

The thermosetting resin composition may contain (A) a bis(2-oxazoline) compound (hereinafter also referred to as "component (A)") and (B) an aromatic diamine compound (hereinafter also referred to as "component (B)").

### [Component (A)]

The bis(2-oxazoline) compound is not particularly limited and can be used as long as it is a compound having two oxazoline skeletons in one molecule. The two oxazoline skeletons may be directly bonded or bonded via an organic group. Component (A) may be blended alone as one type or in combination of two or more types.

The bis(2-oxazoline) compound may be a compound represented by the following general formula (A). 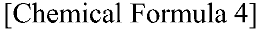 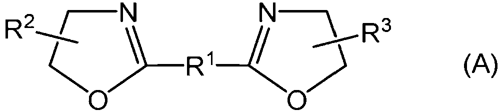 [In formula (A), R¹ represents a single bond, an unsubstituted or substituted alkylene group, an unsubstituted or substituted phenylene group, or an unsubstituted or substituted pyridinediyl group, and R² and R³ each independently represent a hydrogen atom, an alkyl group, or a phenyl group.]

When R¹ has a substituent, examples of the substituent include a methyl group.

Examples of component (A) include 2,2'-(1,3-phenylene)bis-2-oxazoline (hereinafter sometimes abbreviated as "PBO"), 2,2'-(1,4-phenylene)bis-2-oxazoline, 2,2'-(1,2-ethylene)bis-2-oxazoline, 2,2'-(1,4-butylene)bis-2-oxazoline, 2,2'-(1,3-phenylene)bis-(5-methyl-2-oxazoline), (S,S)-2,6-bis(4-isopropyl-2-oxazolin-2-yl)pyridine, and (S,S)-2,2'-(dimethylmethylene)bis(4-phenyl-2-oxazoline).

Component (A) may be PBO because it is inexpensive and easily available.

The content of component (A) in the thermosetting resin composition may be from 25% by mass to 75% by mass, based on the total solid content of the thermosetting resin composition. The solid content of the thermosetting resin composition means components other than the solvent (components that form a cured product).

### [Component (B)]

Examples of the aromatic diamine compound include 4,4'-diaminodiphenylmethane (MDA), 3,3'-dichloro-4,4'-diaminodiphenylmethane (MOCA), 2,2-bis[4-(4-aminophenoxy)phenyl]propane (BAPP), methylenebis(2-ethyl-6-methylaniline), and 4,4'-methylenebis(2-ethylaniline). Component (B) may be blended alone as one type or in combination of two or more types.

The aromatic diamine compound may be an aromatic diamine compound containing a halogen atom such as a chlorine atom or a bromine atom in the molecule.

The molecular weight of the aromatic diamine compound may be 150 or more, or 300 or more, from the viewpoint of being less likely to volatilize, and may be 350 or less from the viewpoints of the impregnability of the thermosetting resin composition into the fiber base material and the like, and ease of use in a liquid state.

The content of component (B) in the thermosetting resin composition may be from 0.03 to 1.0 mol, may be from 0.03 to 0.15 mol, may be from 0.2 to 0.8 mol, or may be from 0.8 to 1.0 mol, per 1 mol of component (A), from the viewpoint of improving the mechanical strength of the resin molded body.

### [Component (C)]

From the viewpoint of obtaining an even higher level of durability, the thermosetting resin composition may further contain, in addition to the above components (A) and (B), (C) an organic cyclic compound (excluding carboxylic acid compounds) (hereinafter also referred to as "component (C)") having at least one polar functional group selected from the group consisting of a hydroxyl group, an amide group, and a carbonyl group, and at least one cyclic structure selected from the group consisting of an alicyclic ring, a heterocyclic ring, and an aromatic ring. Note that carboxylic acid compounds also include acid anhydride compounds. Component (C) may be blended alone as one type or in combination of two or more types.

Component (C) may be a compound represented by the following general formulas (C1) to (C4). 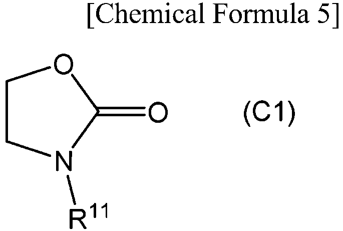 [In formula (C1), R¹¹ represents a hydrogen atom or an acetyl group.] 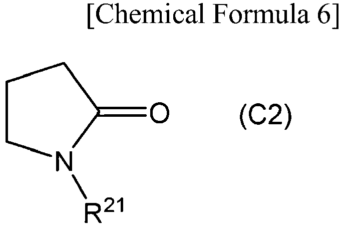 [In formula (C2), R²¹ represents a vinyl group or an alkyl group having a hydroxyl group.] 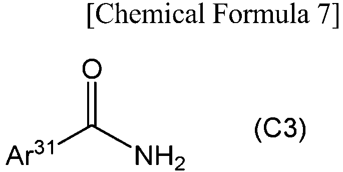 [In formula (C3), Ar³¹ represents an unsubstituted or substituted aromatic group.] 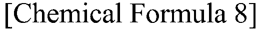 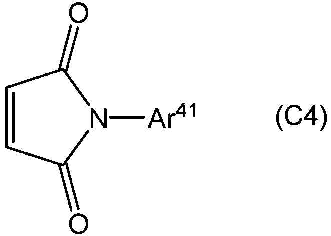 [In formula (C4), Ar⁴¹ represents an aromatic group having a halogen atom.]

Component (C) may be a compound that satisfies any one or more of the following conditions.
(a) Having two or three or more polar functional groups selected from the group consisting of a hydroxyl group, an amide group, and a carbonyl group.
(b) Having a chloro group.

The thermosetting resin composition may contain at least one compound among 2-oxazolidone, 1-(2-hydroxyethyl)-2-pyrrolidone, phthalamide, and N-(2,4,6-trichlorophenyl)maleimide as component (C), and may contain at least one compound among 1-(2-hydroxyethyl)-2-pyrrolidone and N-(2,4,6-trichlorophenyl)maleimide.

The content of component (C) in the thermosetting resin composition may be from 0.05 to 2.0 mol, may be from 0.05 to 0.5 mol, may be from 0.5 to 1.0 mol, or may be from 1.0 to 2.0 mol, per 1 mol of component (A), from the viewpoint of further improving the durability of the resin gear. From the same viewpoint, the total content of component (B) and component (C) in the thermosetting resin composition may be from 0.5 to 2.0 mol, may be from 0.5 to 0.8 mol, may be from 0.8 to 1.0 mol, or may be from 1.0 to 2.0 mol, per 1 mol of component (A).

The content of component (C) in the thermosetting resin composition may be from 5 to 95 parts by mass, may be from 5 to 60 parts by mass, may be from 5 to 30 parts by mass, may be from 30 to 50 parts by mass, or may be from 50 to 60 parts by mass, when the total mass of component (B) and component (C) is taken as 100 parts by mass, from the viewpoint of further improving the durability of the resin gear.

The thermosetting resin composition of the present embodiment may contain a curing accelerator, if necessary, to promote the curing reaction between the bis(2-oxazoline) compound and components such as component (B) and component (C).

Examples of the curing accelerator include p-toluenesulfonic acid esters such as n-octyl bromide and ethyl p-toluenesulfonate.

The content of the curing accelerator in the thermosetting resin composition may be from 0.3 to 5.0 parts by mass, may be from 0.3 to 1.0 parts by mass, or may be from 1.0 to 5.0 parts by mass, per 100 parts by mass of the total of the bis(2-oxazoline) compound, component (B), and component (C).

The thermosetting resin composition may contain additives such as an impact absorbing material like rubber and an organic sliding material like polyethylene glycol, if necessary. Examples of the impact absorbing material include silicone rubber, fluororubber, and nitrile rubber.

The resin molded body can be manufactured by impregnating a fiber base material with the above-described thermosetting resin composition, and then curing the thermosetting resin composition by heating.

In the present embodiment, the fiber base material may be formed by a wet method of sheet-forming in water.

Examples of the curing conditions for the thermosetting resin composition include conditions of 160°C to 250°C for 3 minutes to 20 minutes.

The resin gear of the present embodiment has a tooth portion comprising a resin molded body. The tooth portion may be formed, for example, by using a mold in the shape of a tooth portion in the step of curing the above-described thermosetting resin composition, or may be formed by cutting or the like after obtaining a resin molded body of a predetermined shape by the above-described method.

### EXAMPLES

Hereinafter, the present invention will be described more specifically by way of Examples and Comparative Examples, but the present invention is not limited to the following Examples.

The following compounds were prepared as raw materials for preparing the thermosetting resin compositions.

### [Component (A)]

PBO: 2,2'-(1,3-phenylene)-bis-2-oxazoline (manufactured by Mikuni Pharmaceutical Industrial Co., Ltd.)

### [Component (B)]

MDA: 4,4'-diaminodiphenylmethane (manufactured by Wanhua Chemical Japan Co., Ltd.)

### [Component (C)]

HEPL: 1-(2-hydroxyethyl)-2-pyrrolidone (manufactured by Tokyo Chemical Industry Co., Ltd.)
T1987: N-(2,4,6-trichlorophenyl)maleimide (manufactured by Tokyo Chemical Industry Co., Ltd.)

### [Curing Accelerator]

OB: n-octyl bromide (manufactured by Manac Inc.)

### (Example 1)

PBO as component (A) and MDA as component (B) were mixed at a blending ratio of 69:31 by mass and heated and dissolved to form a liquid material. To this liquid material, OB as a curing accelerator was blended at a ratio of 0.9 parts by mass per 100 parts by mass of the total amount of component (A) and component (B) to obtain a thermosetting resin composition.

Cut fibers (fiber length 3 mm) of para-aramid fiber (trade name Technora, manufactured by Teijin Limited), cut fibers (fiber length 3 mm) of meta-aramid fiber (trade name Conex, manufactured by Teijin Limited), and para-aramid fiber pulp (trade name Kevlar, manufactured by Toray-DuPont Co., Ltd.) were dissociated in water at a mass ratio of 85:10:5 and subjected to sheet-forming to obtain a fiber base material. This fiber base material was compressed in the thickness direction within a sheet-forming mold so that the proportion of the fiber base material in the resin molded body (hereinafter sometimes referred to as "fiber base material volume fraction") became 45% by volume, to obtain a cylindrical reinforcing fiber aggregate.

The cylindrical reinforcing fiber aggregate obtained above was placed in a molding die and the mold was clamped. The thermosetting resin composition prepared above was then injected, and the thermosetting resin composition was cured under the conditions of a molding die temperature of 190°C for 4 minutes to mold a disk (resin molded body). Then, teeth were formed on the molded disk by a cutting process, and this was used as a resin gear.

### (Example 2)

PBO as component (A), MDA as component (B), and HEPL as component (C) were mixed at a blending ratio of 69:25:6 by mass and heated and dissolved to form a liquid material. To this liquid material, OB as a curing accelerator was blended at a ratio of 0.7 parts by mass per 100 parts by mass of the total amount of component (A), component (B), and component (C) to obtain a thermosetting resin composition. A resin gear was molded in the same manner as in Example 1, except that this thermosetting resin composition was used and the molding die temperature was changed to 180°C.

### (Example 3)

PBO as component (A), MDA as component (B), and T1987 as component (C) were mixed at a blending ratio of 69:25:6 by mass and heated and dissolved to form a liquid material. To this liquid material, OB as a curing accelerator was blended at a ratio of 0.9 parts by mass per 100 parts by mass of the total amount of component (A), component (B), and component (C) to obtain a thermosetting resin composition. A resin gear was molded in the same manner as in Example 1, except that this thermosetting resin composition was used.

### (Example 4)

PBO as component (A) and MDA as component (B) were mixed at a blending ratio of 73:27 by mass and heated and dissolved to form a liquid material. To this liquid material, OB as a curing accelerator was blended at a ratio of 0.9 parts by mass per 100 parts by mass of the total amount of component (A) and component (B) to obtain a thermosetting resin composition. A resin gear was molded in the same manner as in Example 1, except that this thermosetting resin composition was used.

### (Comparative Example 1)

A resin gear was molded in the same manner as in Example 1, except that cut fibers (fiber length 3 mm) of para-aramid fiber (trade name Technora, manufactured by Teijin Limited), cut fibers (fiber length 3 mm) of meta-aramid fiber (trade name Conex, manufactured by Teijin Limited), and para-aramid fiber pulp (trade name Kevlar, manufactured by Toray-DuPont Co., Ltd.) were used at a mass ratio of 30:65:5.

### (Comparative Example 2)

A resin gear was molded in the same manner as in Example 1, except that cut fibers (fiber length 3 mm) of para-aramid fiber (trade name Technora, manufactured by Teijin Limited), cut fibers (fiber length 3 mm) of meta-aramid fiber (trade name Conex, manufactured by Teijin Limited), and para-aramid fiber pulp (trade name Kevlar, manufactured by Toray-DuPont Co., Ltd.) were used at a mass ratio of 53:42:5, and the fiber base material volume fraction was changed to 40% by volume.

### [Motoring Durability Test]

The resin gears obtained in the Examples and Comparative Examples were continuously rotated under the test conditions shown below, and the time until the resin gear broke was measured. The test was conducted in conjunction with the following tooth root stress.

### [Test Conditions]

Lubricating oil: Grease
Test temperature: Room temperature
Rotational speed (rpm): 250
Tooth root stress (MPa): 330 to 340

**[Table 1]**

| | | | Example 1 | Example 2 | Example 3 | Example 4 | Comparative Example 1 | Comparative Example 2 |
|---|---|---|---|---|---|---|---|---|
| Thermosetting resin composition (parts by mass) | (A) Component | PBO | 69 | 69 | 69 | 73 | 69 | 69 |
| | (B) Component | MDA | 31 | 25 | 25 | 27 | 31 | 31 |
| | (C) Component | HEPL | | 6 | | | | |
| | | T1987 | - | | 6 | - | - | - |
| | Curing accelerator | OB | 0.9 | 0.7 | 0.9 | 0.9 | 0.9 | 0.9 |
| Fiber base material (mass ratio) | para-aramid fiber | | 85 | 85 | 85 | 85 | 30 | 42 |
| | meta-aramid fiber | | 10 | 10 | 10 | 10 | 65 | 53 |
| | para-aramid fiber pulp | | 5 | 5 | 5 | 5 | 5 | 5 |
| Fiber base material (% by volume) | | | 45 | 45 | 45 | 45 | 45 | 40 |
| Molding die temperature (°C) | | | 190 | 180 | 190 | 190 | 190 | 190 |
| Motoring durability test (h) | | | 43 | 98 | 60 | 73 | 22 | 13 |

Further, Fig. 1 shows the relationship between the total number of rotations (times) until the resin gear broke and the tooth root stress (MPa) when the motoring durability test described above was performed on the resin gears of Examples 1 to 4 and Comparative Examples 1 and 2.

As shown in Fig. 1, it was confirmed that the resin gear of Example 1, which comprises an aramid fiber containing 90% by mass of para-aramid fiber as the fiber base material, has high durability compared to the resin gear of Comparative Example 1, which comprises an aramid fiber containing 35% by mass of para-aramid fiber, not only under high load but also when the load is small. According to the resin gear of the present invention, the durability life can be improved under both low-load and high-load conditions.

## Claims

1. A resin gear having a tooth portion comprising a resin molded body, wherein
the resin molded body comprises a fiber base material and a resin component, and
the fiber base material comprises an aramid fiber containing para-aramid fiber in an amount of 80% by mass to 100% by mass.

2. The resin gear according to claim 1, wherein
the resin component is a cured product of a thermosetting resin composition impregnated into the fiber base material, and
the thermosetting resin composition comprises (A) a bis(2-oxazoline) compound and (B) an aromatic diamine compound.

3. The resin gear according to claim 2, wherein the thermosetting resin composition further comprises (C) an organic cyclic compound (excluding carboxylic acid compounds) having at least one polar functional group selected from the group consisting of a hydroxyl group, an amide group, and a carbonyl group, and at least one cyclic structure selected from the group consisting of an alicyclic ring and an aromatic ring.

4. The resin gear according to claim 3, wherein a content of the organic cyclic compound is from 5 to 95 parts by mass, based on a total of 100 parts by mass of the aromatic diamine compound and the organic cyclic compound.

5. The resin gear according to claim 3 or 4, wherein the organic cyclic compound is 1-(2-hydroxyethyl)-2-pyrrolidone or N-(2,4,6-trichlorophenyl)maleimide.
